# FASCICULE DE BREVET EUROPEEN

(11) **EP 3 931 164 B1**
(45) Date de publication et mention de la délivrance du brevet: **16.08.2023**
(21) Numéro de dépôt: 20719685.8
(22) Date de dépôt: 27.02.2020
(51) Int. Cl.: C03C 17/36, C03C 17/38, C03C 17/42

(54) **SUBSTRAT TRANSPARENT REVÊTU D'UNE COUCHE ORGANIQUE TRANSPARENTE INCOLORE OU COLORÉE DISCONTINUE TEXTURÉE, D'UNE COUCHE MÉTALLIQUE ET D'UNE SURCOUCHE DIELECTRIQUE ET/OU D'ADHÉSION**
MIT EINER TEXTURIERTEN, DISKONTINUIERLICHEN, FARBLOSEN ODER GEFÄRBTEN ORGANISCHEN SCHICHT, MIT EINER METALLSCHICHT UND MIT EINER DIELEKTRISCHEN UND/ODER ADHÄSIVEN DECKSCHICHT BESCHICHTETES TRANSPARENTES SUBSTRAT
TRANSPARENT SUBSTRATE COATED WITH A TEXTURED, DISCONTINUOUS TRANSPARENT, COLORLESS OR COLORED ORGANIC LAYER, WITH A METAL LAYER AND WITH A DIELECTRIC AND/OR ADHESIVE OVERLAYER

(30) Priorité: 28.02.2019 FR 1902081
(43) Date de publication de la demande: 05.01.2022
(73) Titulaire: Saint-Gobain Glass France, 92400 Courbevoie (FR)
(72) Inventeur: BRUDIEU, Barbara, 75014 PARIS (FR); MARIANI, Silvia, 93310 LE PRE SAINT GERVAIS (FR)
(74) Mandataire: Saint-Gobain Recherche
(86) Numéro de dépôt international: PCT/FR2020/050392
(87) Numéro de publication internationale: WO 2020/174194

(56) Documents cités:
- WO-A1-2014/037679
- WO-A1-2014/111662
- WO-A2-2008/076614

## Description

L'invention a trait aux substrats transparents rigides, et particulièrement verriers, pour lesquels de nouveaux aspects visuels, esthétiques, décoratifs, sont recherchés.

Les inventeurs ont imaginé de combiner sur un substrat transparent rigide tel que le verre une couche organique imprimée qui donne au produit l'aspect plus ou moins diffus, revêtue d'une couche ou d'un empilement de couches métallique ayant en soi des propriétés optiques particulières et identifiables à l'œil nu dans le visible. La superposition des deux couches procure un aspect visuel inédit. Document WO2014037679 divulgue un substrat rigide transparent; revêtu successivement d'une couche transparente incolore discontinue et texturé; d'une couche réfléchissante; et d'une couche de peinture.

A cet effet l'invention a pour objet un substrat rigide transparent revêtu successivement
- d'une couche organique transparente incolore ou colorée discontinue, comprenant des zones texturées selon des points pᵢ (i = 1, 2...), et organisées en motifs macroscopiques qui ont des aspects visuels différents les uns des autres, les points pᵢ ayant une surface Sᵢ, un diamètre Dᵢ défini comme le diamètre du cercle qui a la surface Sᵢ, un centre Cᵢ défini comme le barycentre de Sᵢ, une période Pᵢ définie comme la distance moyenne du centre Cᵢ au centre des points qui sont les plus proches voisins du point pᵢ, définis par triangulation de Delaunay, la surface entre les points pᵢ étant plane et l'aspect des motifs macroscopiques étant déterminé par une valeur spécifique de la moyenne des périodes Pᵢ, appelée période moyenne P et de la moyenne des diamètres Dᵢ, appelée diamètre moyen D, des points pᵢ du motif macroscopique ;
- d'une couche d'interface d'épaisseur comprise entre 1 et 250 nm, comportant au moins une couche métallique et au moins une surcouche d'un matériau diélectrique et/ou d'adhésion déposée sur la couche métallique ;
- d'une couche réfléchissante ; et
- d'une couche de peinture d'épaisseur comprise entre 1 et 100 µm, protectrice vis-à-vis de la corrosion et l'oxydation entre autres.

La couche réfléchissante procure la fonction d'un miroir du côté du substrat opposé à la face revêtue de la couche organique
La couche protectrice est opaque ou transparente et peut consister en une peinture organique et/ou minérale.

La couche d'interface, ayant une très bonne adhésion sur la couche organique permet d'apporter une coloration homogène particulière au produit ; si on imprimait une encre colorée, cela ne serait pas le cas. L'effet réfléchissant du miroir n'est pas perdu, tandis qu'il le serait en présence d'une couche homogène d'encre,

La couche organique comprend des points dont la forme peut être plus ou moins proche de celle de demi-sphères, notamment aplaties par rapport à celles-ci, de hauteurs Hᵢ pouvant être aussi petites qu'1/10 de Dᵢ, mais Hᵢ est au plus égale à Dᵢ, ou ovoïdale, ou polygonale, pouvant présenter des surfaces concaves, par exemple du type à section transversale en étoile... Dans les zones texturées à points, la couche organique présente une discontinuité entre les points, c'est-à-dire une épaisseur nulle, ou une épaisseur très petite par rapport à la hauteur des points, jusqu'à 1/10 ème de la hauteur Hᵢ des points pᵢ, pourvu que sa surface soit plane.

Les points peuvent être ordonnés selon une périodicité dans une ou plusieurs dimensions, notamment dans un motif macroscopique, ou non. Dans ce cas, les périodes Pᵢ et les diamètres Dᵢ de tous les points pᵢ d'un motif macroscopique, par exemple, peuvent être identiques, égaux à la période moyenne P, respectivement au diamètre moyen D.

Lesdits motifs macroscopiques sont visibles en réflexion du côté du substrat opposé à la face revêtue de la couche organique. Lorsque la valeur du rapport du diamètre moyen D sur la période moyenne P des points décroît, c'est-à-dire lorsque le taux de recouvrement des points sur la surface décroît, l'intensité de la réflexion diffuse à faible angle (par rapport au rayon de réflexion spéculaire) décroît également, et la proportion de réflexion spéculaire croît corrélativement à la surface plane interstitielle entre les points. Le taux de recouvrement des points est défini comme la proportion recouverte de points pᵢ d'une surface considérée, c'est-à-dire le quotient de la somme des surfaces Sᵢ sur cette surface considérée. Inversement, quand le rapport du diamètre moyen D sur la période moyenne P des points croît, c'est-à-dire lorsque le taux de recouvrement des points sur la surface croît, l'intensité de la réflexion diffuse à faible angle autour du rayon de réflexion spéculaire augmente.

Ainsi, selon l'invention, en contrôlant localement les valeurs des périodes moyennes P et diamètres moyens D des points selon des motifs macroscopiques, on produit un effet décoratif spécifique en réflexion, les motifs macroscopiques résultant d'intensités différentes contrôlées de la réflexion diffuse à faible angle. Par rapport aux substrats connus à l'heure actuelle, celui de l'invention diffuse en réflexion à petits angles, évitant un aspect blanchâtre désagréable et inesthétique en réflexion. L'aspect blanchâtre est dans l'état de la technique la manifestation de valeurs relativement élevées du flou et de la réflexion diffuse à larges angles ; grâce à l'invention, ces valeurs sont suffisamment faibles pour supprimer tout aspect blanchâtre

Que la texturation soit périodique ou non, si les valeurs de la période moyenne P et du diamètre moyen D sont les mêmes sur deux surfaces différentes, par exemple deux motifs macroscopiques distincts, leur aspect visuel en réflexion est identique. Inversement, cet aspect visuel en réflexion change en modifiant la valeur de la période moyenne P, du diamètre moyen D, ou bien des deux.

Les zones texturées de la couche organique selon l'invention sont aptes à produire une réflexion assez nette, peu diffusante. La réflexion diffuse est suffisamment faible pour permettre de distinguer assez nettement en réflexion la forme, le contour de tout objet réfléchi, reconnaître un visage...

Les motifs macroscopiques peuvent être de toutes formes : géométriques, telles que triangle. Le choix et la combinaison de ces formes, ainsi que des valeurs de la période moyenne P et du diamètre moyen D pour les motifs macroscopiques voisins permettent de produire tout aspect esthétique recherché pour l'ensemble, par exemple un effet métallique tissé en réflexion.

La couche d'interface combine une coloration au décor selon des motifs macroscopiques désirés produits par la couche organique.

De préférence, le taux de recouvrement des points pᵢ dans les zones texturées, notamment dans chacun des motifs macroscopiques, est compris entre 10 et 70 % et de préférence entre 15 et 40 %, à condition que les points ne coalescent pas. S'ils coalescent, la réflexion diffuse à faible angle chute et l'effet esthétique recherché n'est plus présent. Ce taux de recouvrement est la proportion d'une surface considérée qui est recouverte de points pᵢ, c'est-à-dire le quotient de la somme des surfaces Sᵢ sur cette surface considérée.

De préférence, le taux de recouvrement des points pᵢ dans deux motifs macroscopiques adjacents varie d'au moins 5 %. L'aspect visuel de ces deux motifs macroscopiques s'en trouve d'autant différencié.

De préférence, les points pᵢ ont des hauteurs Hᵢ comprises entre 10 nm et 100 µm, des périodes Pᵢ comprises entre 10 et 500 µm et des diamètres Dᵢ compris entre 10 et 500 µm.

De manière particulièrement préférée, lesdits points pᵢ sont de hauteurs Hᵢ comprises entre 1 et 20 µm, de périodes Pᵢ comprises entre 100 et 300 µm et de diamètres Dᵢ compris entre 30 et 300 µm.

Dans une réalisation particulière, la couche organique transparente incolore ou colorée discontinue comprend des zones non texturées ayant chacune une épaisseur constante comprise entre 0 et 50 µm d'épaisseur ; les zones non texturées produisent une réflexion spéculaire qui, associée à la réflexion à travers les zones voisines texturées selon l'invention, participe à l'effet décoratif en rendant visibles des motifs voulus.

Dans une autre réalisation particulière n'excluant pas la précédente, au moins deux motifs macroscopiques et/ou zones non texturées sont délimités par une ou plusieurs lignes parallèles formée(s) par un dépôt homogène non texturé de vernis, chacune de largeur du même ordre que le diamètre moyen D, l'écartement entre deux lignes voisines étant aussi du même ordre que le diamètre moyen D. Ces lignes produisent une brillance contrastée avec la diffusion entre deux zones de points différentes (telles que deux motifs macroscopiques), ou bien entre un motif macroscopique et une zone non texturée de la couche organique.

De préférence, le substrat rigide transparent consiste en verre tel que sodocalcique, aluminosilicate, borosilicate.

Avantageusement, la couche organique est choisie parmi un polymère thermoplastique dissous dans un solvant, tel que polystyrène, ou en émulsion dans un solvant, tel que latex acrylique, un polymère thermodurcissable durci par voie thermique, tel que époxy, polyuréthane, polyester, acrylique, mélamine, un polymère thermodurcissable réticulable par ultraviolet, tel qu'acrylate et dérivés du type époxyacrylate, polyester acrylate, polyuréthane acrylate, époxy cationique, une composition polyvinylpyrrolidone + EDTA, polyamide, polyvinylbutyral, résine photosensible positive de type diazonaphtoquinone-novolaque, tout matériau organique réticulé sous rayonnement ultraviolet ou infrarouge, ou thermoréticulable, seul(e) ou en mélanges ou copolymères à blocs ou greffés de plusieurs d'entre eux (elles).

Selon une première variante principale, la couche d'interface consiste en une couche discontinue métallique telle qu'argent d'épaisseur comprise entre 0,1 et 4 nm et une surcouche diélectrique telle que Si₃N₄, oxyde d'indium dopé à l'étain (en anglais Indium Tin Oxide - ITO -), SnZnOₓ, Nb₂Oₓ, TiOₓ, d'épaisseur comprise entre 1 et 40 nm. Il peut s'agir d'un dépôt de nanoparticules métalliques tel que l'argent dans une matrice diélectrique telle que le dioxyde de titane (TiO₂) ; ce matériau pourra être appelé un cermet dans la suite.

Selon une seconde variante principale, la couche d'interface comprend au moins une couche métallique à base d'un métal ou d'un alliage métallique choisi parmi le niobium, le titane et les alliages de nickel et de chrome, d'épaisseur totale comprise entre 2 et 10 nm et au moins une couche à base de nitrure de silicium d'épaisseur totale comprise entre 10 et 200 nm, ou comprend au moins une couche métallique continue à base de cuivre ayant une épaisseur comprise entre 10 et 100 nm surmontée d'une couche d'adhésion en oxyde métallique tel qu'oxyde de titane, d'épaisseur comprise entre 2 et 20 nm.

De préférence, la couche réfléchissante est en argent et a une épaisseur comprise entre 1 nm et 1 µm, de préférence entre 10 et 100 nm

Un autre objet de l'invention consiste en un procédé de fabrication d'un substrat rigide tel que décrit ci-dessus, caractérisé en ce qu'il comprend les opérations consistant à déposer successivement sur un substrat rigide transparent
- une couche organique texturée à partir d'une composition liquide dans un solvant ou dans l'eau, ou à partir d'une composition solide, ayant le cas échéant une viscosité comprise entre 0,005 et 100, de préférence 0,5 et 5 Pa.s, une rhéologie newtonienne ou rhéo-fluidifiante, pouvant comprendre au moins un photoinitiateur et/ou au moins un promoteur d'adhésion tel que phosphate acrylate ou silyl acrylate, puis en exposant la couche organique à un rayonnement ultraviolet ou infrarouge ou à un chauffage ;
- une couche d'interface par un procédé de dépôt physique en phase vapeur (PVD pour Physical Vapor Déposition) sous vide, principalement pulvérisation cathodique assistée par magnétron, dépôt chimique en phase vapeur (CVD pour Chemical Vapor Déposition) ou évaporation, chaque fois notamment sous vide;
- une couche réfléchissante par un procédé d'oxydoréduction (connu sous les termes anglais « electroless plating ») ou par un procédé équivalent ; et
- une couche de peinture protectrice par un procédé par voie liquide tel que par rideau ou pulvérisation.

La couche organique peut être transparente incolore ou colorée, réticulée sous illumination UV ou séchage IR.

La couche réfléchissante apporte la propriété miroir au produit.

Le dépôt de la couche organique texturée est effectué de préférence par impression, telle qu'au rouleau, par flexographie, impression digitale du type jet d'encre ou sublimation, ou par sérigraphie.

L'invention a également pour objet l'application du substrat rigide décrit ci-dessus pour la décoration intérieure ou extérieure comme paroi, surface de meuble.

Le dessin annexé illustre l'invention :

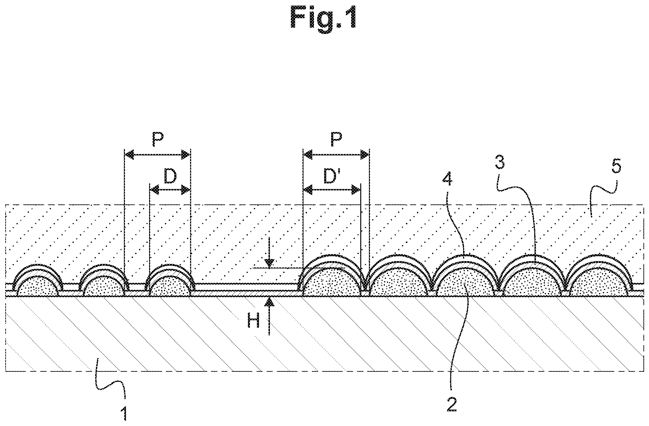

La figure 1 représente schématiquement en coupe, un substrat rigide transparent conforme à l'invention.

En référence à ce dessin, un substrat rigide conforme à l'invention comprend un substrat rigide transparent 1 en verre sodocalcique flotté de 4 mm d'épaisseur, commercialisé par la Société Saint-Gobain Glass sous la marque enregistrée Planiclear^{®}, successivement revêtu
- d'une couche organique 2 transparente dont la nature sera précisée dans la suite, texturée selon des points de hauteurs comprises entre 1 et 20 µm, de périodes comprises entre 100 et 300 µm et de diamètres compris entre 30 et 300 µm ;
- d'une couche d'interface 3 d'épaisseur comprise entre 1 et 250 nm ;
- d'une couche d'argent réfléchissante 4 d'épaisseur comprise entre 1 nm et 1 µm ; et
- d'une couche de peinture 5 d'épaisseur comprise entre 1 et 100 µm, protectrice vis-à-vis de la corrosion et l'oxydation entre autres.

La période des points a une valeur constante de P, tandis que peuvent être distinguées deux zones : une où la valeur du diamètre des points est constamment égale à D, et l'autre où elle est constamment égale à D', les valeurs de la hauteur H des points étant corrélativement constantes dans chacune de ces deux zones, mais différentes d'une zone à l'autre.

D'est plus grand que D ; avec une période P identique dans les deux zones, celles-ci se distinguent visuellement en réflexion l'une de l'autre par une intensité de la réflexion diffuse à faible angle plus grande dans la zone de points plus grands. Les contours des deux zones sont formés de manière à produire un effet décoratif désiré.

Le tableau 1 ci-dessous décrit les formulations de trois couches organiques transparentes A, B et C.

**[Tableaux 1]**

| Formulation¶ %·en·poids¤ | A¤ | B¤ | C¤ | ¤ |
|---|---|---|---|---|
| CN9276¤ | ¤ | ¤ | 56,10H¤ | ¤ |
| CN9010¤ | 56,10¤ | 46,10¤ | ¤ | ¤ |
| CN9001¤ | » | 10¤ | ¤ | ¤ |
| SR833S¤ | 16,84¤ | 16°,84¤ | 16,84¤ | ¤ |
| SR351¤ | 16,84¤ | 16,84¤ | ¤ | ¤ |
| SR238¤ | » | ¤ | 16,84¤ | ¤ |
| SR9054¤ | 5,16¤ | 5,15¤ | 5,15¤ | ¤ |
| SpeedCure^{®}¤ | 5,10¤ | 5,10¤ | 5,10¤ | ¤ |
| Viscosité Pa.s¤ | 1¤ | 2¤ | 0,2¤ | ¤ |

SpeedCure^{®} (ou Irgacure^{®}) : photoinitiateur.

Composés commercialisés par la Société Sartomer :
CN9276 et 9010 : oligomère uréthane hexaacrylate aliphatique ;
CN9001 : oligomère uréthane diacrylate aliphatique ;
SR833S : Tricyclodécanediméthanol Diacrylate (TCDDMDA) ;
SR351 : Triméthylolpropane Triacrylate (TMPTA) ;
SR238 : 1,6 Hexanediol Diacrylate (HDDA) ;
SR9054 : promoteur d'adhésion Phosphate méthacrylate acide.

La couche organique 2 texturée selon des points (demi-sphères) est formée par sérigraphie.

La couche d'interface 3 est un cermet constitué d'une couche discontinue d'argent de 0,4 nm d'épaisseur revêtue d'une surcouche de TiOₓ de 5 nm, chacune étant obtenue par pulvérisation cathodique assistée par magnétron. Le gaz employé est l'argon dans les deux cas, les cibles sont en argent, ou en TiO₂.

La couche d'argent réfléchissante 4 est d'épaisseur comprise entre 70 et 80 nm ; elle est formée par oxydoréduction (procédé connu sous les termes anglais « electroless plating »).

La couche de peinture 5 est déposée par rideau.

Des mesures dans le système L*a*b* ont été faites pour caractériser la couleur du substrat réfléchissant selon l'invention. On a utilisé l'illuminant D65 et avec un angle d'observation de 10° (calibration en l'air pour faire le zéro, matériau diffusant parfait pour faire le blanc, machine Minolta^{®}).

L = 90 ; a* = 3,3 ; b* = 3,6 correspondant à une couleur plutôt pêche.

Le substrat de l'invention est apte à réfléchir une image assez nette et légèrement colorée en une teinte choisie, à laquelle se superpose un décor à motifs choisis, obtenus par des intensités différenciées de la réflexion diffuse à faible angle.

## Revendications

1. Substrat rigide transparent (1) revêtu successivement
- d'une couche organique (2) transparente incolore ou colorée discontinue, comprenant des zones texturées selon des points pᵢ (i = 1, 2...), et organisées en motifs macroscopiques qui ont des aspects visuels différents les uns des autres, les points pᵢ ayant une surface Sᵢ, un diamètre Dᵢ défini comme le diamètre du cercle qui a la surface Sᵢ, un centre Cᵢ défini comme le barycentre de Sᵢ, une période Pᵢ définie comme la distance moyenne du centre Cᵢ au centre des points qui sont les plus proches voisins du point pᵢ, définis par triangulation de Delaunay, la surface entre les points pᵢ étant plane et l'aspect des motifs macroscopiques étant déterminé par une valeur spécifique de la moyenne des périodes Pᵢ, appelée période moyenne P et de la moyenne des diamètres Dᵢ, appelée diamètre moyen D, des points pᵢ du motif macroscopique ;
- d'une couche d'interface (3) d'épaisseur comprise entre 1 et 250 nm, comportant au moins une couche métallique et au moins une surcouche d'un matériau diélectrique et/ou d'adhésion déposée sur la couche métallique ;
- d'une couche réfléchissante (4) ; et
- d'une couche de peinture (5) d'épaisseur comprise entre 1 et 100 µm, protectrice vis-à-vis de la corrosion et l'oxydation entre autres.

2. Substrat rigide selon la revendication 1, **caractérisé en ce que** le taux de recouvrement des points pᵢ dans les zones texturées, notamment dans chacun des motifs macroscopiques, est compris entre 10 et 70 % et de préférence entre 15 et 40 % à condition que les points ne coalescent pas.

3. Substrat rigide selon l'une des revendications précédentes, **caractérisé en ce que** le taux de recouvrement des points pᵢ dans deux motifs macroscopiques adjacents varie d'au moins 5 %.

4. Substrat rigide selon l'une des revendications précédentes, **caractérisé en ce que** les points pᵢ ont des hauteurs Hᵢ comprises entre 10 nm et 100 µm, des périodes Pᵢ comprises entre 10 et 500 µm et des diamètres Dᵢ compris entre 10 et 500 µm.

5. Substrat rigide selon l'une des revendications précédentes, **caractérisé en ce que** les points pᵢ ont des hauteurs Hᵢ comprises entre 1 et 20 µm.

6. Substrat rigide selon l'une des revendications précédentes, **caractérisé en ce que** les points pᵢ ont des périodes Pᵢ comprises entre 100 et 300 µm.

7. Substrat rigide selon l'une des revendications précédentes, **caractérisé en ce que** les points pᵢ ont des diamètres Dᵢ compris entre 30 et 300 µm.

8. Substrat rigide selon l'une des revendications précédentes, **caractérisé en ce que** la couche organique transparente incolore ou colorée discontinue comprend des zones non texturées ayant chacune une épaisseur constante comprise entre 0 et 50 µm d'épaisseur.

9. Substrat rigide selon l'une des revendications 1 à 7 ou 8, **caractérisé en ce qu'**au moins deux motifs macroscopiques et/ou zones non texturées sont délimités par une ou plusieurs lignes parallèles formée(s) par un dépôt homogène non texturé de vernis, chacune de largeur du même ordre que le diamètre moyen D, l'écartement entre deux lignes voisines étant aussi du même ordre que le diamètre moyen D.

10. Substrat rigide selon l'une des revendications précédentes, **caractérisé en ce qu'**il consiste en verre tel que sodocalcique, aluminosilicate, borosilicate.

11. Substrat rigide selon l'une des revendications précédentes, **caractérisé en ce que** la couche organique (2) est choisie parmi un polymère thermoplastique dissous dans un solvant ou en émulsion dans un solvant, tout matériau organique réticulé sous rayonnement ultraviolet ou infrarouge, ou thermoréticulable.

12. Substrat rigide selon l'une des revendications précédentes, **caractérisé en ce que** la couche d'interface (3) consiste en une couche discontinue métallique telle qu'argent d'épaisseur comprise entre 0,1 et 4 nm et une surcouche diélectrique telle que Si₃N₄, oxyde d'indium dopé à l'étain (en anglais Indium Tin Oxide - ITO -), SnZnOₓ, Nb₂Oₓ, TiOₓ, d'épaisseur comprise entre 1 et 40 nm.

13. Substrat rigide selon l'une des revendications 1 à 11, **caractérisé en ce que** la couche d'interface (3) comprend au moins une couche métallique à base d'un métal ou d'un alliage métallique choisi parmi le niobium, le titane et les alliages de nickel et de chrome, d'épaisseur totale comprise entre 2 et 10 nm et au moins une couche à base de nitrure de silicium d'épaisseur totale comprise entre 10 et 200 nm, ou comprend au moins une couche métallique continue à base de cuivre ayant une épaisseur comprise entre 10 et 100 nm surmontée d'une couche d'adhésion en oxyde métallique tel qu'oxyde de titane, d'épaisseur comprise entre 2 et 20 nm.

14. Substrat rigide selon l'une des revendications précédentes, **caractérisé en ce que** la couche réfléchissante (4) est en argent et a une épaisseur comprise entre 1 nm et 1 µm, de préférence entre 10 et 100 nm.

15. Procédé de fabrication d'un substrat rigide selon l'une des revendications précédentes, **caractérisé en ce qu'**il comprend les opérations consistant à déposer successivement sur un substrat rigide transparent (1)
- une couche organique (2) texturée à partir d'une composition liquide dans un solvant ou dans l'eau, ou à partir d'une composition solide, ayant le cas échéant une viscosité comprise entre 0,005 et 100, de préférence 0,5 et 5 Pa.s, une rhéologie newtonienne ou rhéo-fluidifiante, pouvant comprendre au moins un photoinitiateur et/ou au moins un promoteur d'adhésion tel que phosphate acrylate ou silyl acrylate, puis en exposant la couche organique à un rayonnement ultraviolet ou infrarouge ou à un chauffage ;
- une couche d'interface (3) par un procédé de dépôt physique en phase vapeur (PVD pour Physical Vapor Déposition) sous vide, principalement pulvérisation cathodique assistée par magnétron, dépôt chimique en phase vapeur (CVD pour Chemical Vapor Déposition) ou évaporation ;
- une couche réfléchissante (4) par un procédé d'oxydoréduction ou équivalent ; et
- une couche de peinture (5) protectrice par un procédé par voie liquide tel que par rideau ou pulvérisation.

16. Procédé de fabrication d'un substrat rigide selon la revendication 15, **caractérisé en ce que** le dépôt de la couche organique (2) texturée est effectué par impression, telle qu'au rouleau, par flexographie, impression digitale du type jet d'encre ou sublimation, ou par sérigraphie.

17. Application d'un substrat rigide selon l'une des revendications 1 à 14 pour la décoration intérieure ou extérieure comme paroi, surface de meuble.

## Patentansprüche

1. Transparentes starres Substrat (1), aufeinanderfolgend beschichtet:
- mit einer diskontinuierlichen farblosen oder gefärbten transparenten organischen Schicht (2), umfassend texturierte Zonen gemäß Punkten pᵢ (i = 1, 2...) und die zu makroskopischen Mustern organisiert sind, die visuelle Aspekte besitzen, die sich voneinander unterscheiden, wobei die Punkte pᵢ eine Oberfläche Sᵢ, einen Durchmesser Dᵢ, der als der Durchmesser des Kreises definiert ist, der die Oberfläche Sᵢ besitzt, eine Mitte Cᵢ, die als der Massenmittelpunkt von Sᵢ definiert ist, eine Periode Pᵢ, die als d mittlere Abstand von der Mitte Cᵢ zu der Mitte der Punkte definiert ist, die die nächsten Nachbarn des Punkts pᵢ sind, die durch Delaunay-Triangulierung definiert sind, besitzen, wobei die Oberfläche zwischen den Punkten pᵢ eben ist und der Aspekt der makroskopischen Muster durch einen spezifischen Wert des Mittelwerts der Perioden Pᵢ, genannt mittlere Periode P, und des Mittelwerts der Durchmesser Dᵢ, genannt mittlerer Durchmesser D, der Punkte pᵢ des makroskopischen Musters bestimmt ist;
- mit einer Grenzflächenschicht (3) mit einer Dicke zwischen 1 und 250 m, die mindestens eine metallische Schicht und mindestens eine Deckschicht aus dielektrischem Material und/oder für Haftung aufweist, die auf der metallischen Schicht abgeschieden ist;
- mit einer reflektierenden Schicht (4); und
- mit einer Anstrichschicht (5) mit Dicke zwischen 1 und 100 µm, die unter anderem gegenüber Korrosion und Oxidation schützt.

2. Starres Substrat nach Anspruch 1, **dadurch gekennzeichnet, dass** der Bedeckungsgrad der Punkte pᵢ in den texturierten Zonen, insbesondere in jedem der makroskopischen Muster, zwischen 10 und 70 % und vorzugsweise zwischen 15 und 40 % liegt, vorausgesetzt, dass die Punkte nicht koaleszieren.

3. Starres Substrat nach einem der vorstehenden Ansprüche, **dadurch gekennzeichnet, dass** der Bedeckungsgrad der Punkte pᵢ in zwei angrenzenden makroskopischen Mustern um mindestens 5 % variiert.

4. Starres Substrat nach einem der vorstehenden Ansprüche,
**dadurch gekennzeichnet, dass** die Punkte pᵢ Höhen Hᵢ zwischen 10 nm und 100 µm, Perioden Pᵢ zwischen 10 und 500 µm und Durchmesser Dᵢ zwischen 10 und 500 µm besitzen.

5. Starres Substrat nach einem der vorstehenden Ansprüche,
**dadurch gekennzeichnet, dass** die Punkte pᵢ Höhen Hᵢ zwischen 1 und 20 µm besitzen.

6. Starres Substrat nach einem der vorstehenden Ansprüche,
**dadurch gekennzeichnet, dass** die Punkte pᵢ Perioden Pᵢ zwischen 100 und 300 µm besitzen.

7. Starres Substrat nach einem der vorstehenden Ansprüche,
**dadurch gekennzeichnet, dass** die Punkte pᵢ Durchmesser Dᵢ zwischen 30 und 300 µm besitzen.

8. Starres Substrat nach einem der vorstehenden Ansprüche,
**dadurch gekennzeichnet, dass** die diskontinuierliche farblose oder gefärbte transparente organische Schicht nicht texturierte Zonen umfasst, die jeweils eine konstante Dicke zwischen 0 und 50 µm Dicke besitzen.

9. Starres Substrat nach einem der Ansprüche 1 bis 7 oder 8,
**dadurch gekennzeichnet, dass** mindestens zwei makroskopische Muster und/oder nicht texturierte Zonen durch eine oder mehrere parallele Linien begrenzt sind, die durch eine nicht texturierte homogene Lackabscheidung ausgebildet ist/sind, die jeweils eine Breite derselben Größenordnung wie der mittlere Durchmesser D vorweisen, wobei der Zwischenraum zwischen zwei benachbarten Linien auch von derselben Größenordnung wie der mittlere Durchmesser D ist.

10. Starres Substrat nach einem der vorstehenden Ansprüche,
**dadurch gekennzeichnet, dass** es aus Glas wie Natronkalk, Aluminiumsilicat, Borosilicat besteht.

11. Starres Substrat nach einem der vorstehenden Ansprüche,
**dadurch gekennzeichnet, dass** die organische Schicht (2) aus einem thermoplastischen Polymer besteht, das in einem Lösungsmittel oder in Emulsion in einem Lösungsmittel aufgelöst ist, wobei das gesamte organische Material unter Ultraviolett- oder Infrarotbestrahlung vernetzt wird oder thermisch vernetzbar ist.

12. Starres Substrat nach einem der vorstehenden Ansprüche,
**dadurch gekennzeichnet, dass** die Grenzflächenschicht (3) aus einer diskontinuierlichen metallischen Schicht wie Silber mit Dicke zwischen 0,1 und 4 nm und einer dielektrischen Deckschicht wie Si₃N₄, Indiumoxid, das mit Zinn dotiert ist (auf Englisch Indium Tin Oxide - ITO -), SnZnOₓ, Nb₂Oₓ, TiOₓ, mit Dicke zwischen 1 und 40 nm besteht.

13. Starres Substrat nach einem der Ansprüche 1 bis 11,
**dadurch gekennzeichnet, dass** die Grenzflächenschicht (3) mindestens eine metallische Schicht auf Basis eines Metalls oder einer Metalllegierung, die aus Niob, Titan und Nickel- und Chromlegierungen ausgewählt ist, mit Gesamtdicke zwischen 2 und 10 nm und mindestens einer Schicht auf Basis von Siliciumnitrid mit Gesamtdicke zwischen 10 und 200 nm umfasst, oder mindestens eine kontinuierliche metallische Schicht auf Basis von Kupfer umfasst, die eine Dicke zwischen 10 und 100 nm besitzt, die von einer Haftschicht aus Metalloxid wie zum Beispiel Titanoxid mit Dicke zwischen 2 und 20 nm überragt wird.

14. Starres Substrats nach einem der vorstehenden Ansprüche,
**dadurch gekennzeichnet, dass** die reflektierende Schicht (4) aus Silber ist und eine Dicke zwischen 1 nm und 1 µm besitzt, vorzugsweise zwischen 10 und 100 nm.

15. Verfahren zum Herstellen eines starren Substrat nach einem der vorstehenden Ansprüche, **dadurch gekennzeichnet, dass** es Abläufe umfasst, die aus dem aufeinanderfolgenden Abscheiden auf ein transparentes starres Substrat (1) bestehen von:
- einer texturierten organischen Schicht (2) aus einer flüssigen Zusammensetzung in einem Lösungsmittel oder in Wasser, oder aus einer festen Zusammensetzung, die gegebenenfalls eine Viskosität zwischen 0,005 und 100, vorzugsweise zwischen 0,5 und 5 Pa.s, eine newtonsche oder rheofluidisierende Rheologie besitzt, die mindestens einen Photoinitiator und/oder mindestens einen Haftförderer wie zum Beispiel Phosphatacrylat oder Silylacrylat umfassen kann, dann indem die organische Schicht einer Ultraviolett- oder Infrarotstrahlung oder einer Erhitzung ausgesetzt wird;
- einer Grenzflächenschicht (3) durch ein Verfahren einer physikalischen Gasphasenabscheidung (PVD für Physical Vapor Deposition) im Vakuum, hauptsächlich Kathodenzerstäubung, die durch ein Magnetron unterstützt wird, chemische Gasphasenabscheidung (CVD für Chemical Vapor Deposition) oder Verdampfung;
- einer reflektierenden Schicht (4) durch ein Verfahren einer Oxidationsreduktion oder dergleichen; und
- einer schützenden Anstrichschicht (5) durch ein Verfahren auf flüssigem Weg wie zum Beispiel durch einen Vorhang oder Zerstäubung.

16. Verfahren zum Herstellen eines starren Substrats nach Anspruch 15, **dadurch gekennzeichnet, dass** das Abscheiden der texturierten organischen Schicht (2) durch Drucken, wie zum Beispiel mit einer Walze, durch Flexodruck, durch digitales Drucken der Tintenstrahlart oder Sublimation oder durch Siebdruck erfolgt.

17. Anwendung eines starren Substrats nach einem der Ansprüche 1 bis 14 für die Innen- oder Außendekoration als Wand, Möbeloberfläche.

## Claims

1. A rigid transparent substrate (1) successively coated:
- with a discontinuous colorless or colored transparent organic layer (2), comprising zones textured according to dots pᵢ (i = 1, 2, and the like), and organized in macroscopic patterns which have different visual appearances from one another, the dots pᵢ having an area Sᵢ, a diameter Dᵢ defined as the diameter of the circle which has the area Sᵢ, a center Cᵢ defined as the barycenter of Sᵢ, a period Pᵢ defined as the mean distance from the center Cᵢ to the center of the dots which are the closest neighbors to the dot pᵢ, defined by Delaunay triangulation, the area between the dots Pᵢ being planar and the appearance of the macroscopic patterns being determined by a specific value of the mean of the periods Pᵢ, called mean period P, and the mean of the diameters Dᵢ, called mean diameter D, of the dots pᵢ of the macroscopic pattern;
- with an interfacial layer (3) with a thickness of between 1 and 250 nm, comprising at least one metal layer and at least one overlayer of a dielectric and/or adhesive material deposited on the metal layer;
- with a reflective layer (4); and
- with a layer of paint (5) with a thickness of between 1 and 100 µm, which is protective with regard to corrosion and oxidation, *inter alia.*

2. The rigid substrate as claimed in claim 1, **characterized in that** the degree of coverage of the dots pᵢ in the textured zones, in particular in each of the macroscopic patterns, is between 10% and 70% and preferably between 15% and 40%, provided that the dots do not coalesce.

3. The rigid substrate as claimed in either of the preceding claims, **characterized in that** the degree of coverage of the dots pᵢ in two adjacent macroscopic patterns varies by at least 5%.

4. The rigid substrate as claimed in one of the preceding claims, **characterized in that** the dots pᵢ have heights Hᵢ of between 10 nm and 100 µm, periods Pᵢ of between 10 and 500 µm and diameters Dᵢ of between 10 and 500 µm.

5. The rigid substrate as claimed in one of the preceding claims, **characterized in that** the dots pᵢ have heights Hᵢ of between 1 and 20 µm.

6. The rigid substrate as claimed in one of the preceding claims, **characterized in that** the dots pᵢ have periods Pᵢ of between 100 and 300 µm.

7. The rigid substrate as claimed in one of the preceding claims, **characterized in that** the dots pᵢ have diameters Dᵢ of between 30 and 300 µm.

8. The rigid substrate as claimed in one of the preceding claims, **characterized in that** the discontinuous colorless or colored transparent organic layer comprises non-textured zones each having a constant thickness of between 0 and 50 µm in thickness.

9. The rigid substrate as claimed in one of claims 1 to 7 or 8, **characterized in that** at least two macroscopic patterns and/or non-textured zones are delimited by one or more parallel lines formed by a non-textured homogeneous deposit of varnish, each with a width of the same order as the mean diameter D, the spacing between two neighboring lines also being of the same order as the mean diameter D.

10. The rigid substrate as claimed in one of the preceding claims, **characterized in that** it consists of glass, such as soda-lime, aluminosilicate or borosilicate glass.

11. The rigid substrate as claimed in one of the preceding claims, **characterized in that** the organic layer (2) is chosen from a thermoplastic polymer dissolved in a solvent or in emulsion in a solvent, any organic material which is crosslinked under ultraviolet or infrared radiation, or heat-crosslinkable.

12. The rigid substrate as claimed in one of the preceding claims, **characterized in that** the interfacial layer (3) consists of a discontinuous metal layer, such as silver, with a thickness of between 0.1 and 4 nm, and a dielectric overlayer, such as Si₃N₄, tin-doped indium oxide (Indium Tin Oxide - ITO), SnZnOₓ, Nb₂Oₓ, TiOₓ, with a thickness of between 1 and 40 nm.

13. The rigid substrate as claimed in one of claims 1 to 11, **characterized in that** the interfacial layer (3) comprises at least one metal layer based on a metal or on a metal alloy chosen from niobium, titanium and alloys of nickel and chromium, with a total thickness of between 2 and 10 nm, and at least one layer based on silicon nitride with a total thickness of between 10 and 200 nm, or comprises at least one continuous metal layer based on copper having a thickness of between 10 and 100 nm surmounted by an adhesive layer made of metal oxide, such as titanium oxide, with a thickness of between 2 and 20 nm.

14. The rigid substrate as claimed in one of the preceding claims, **characterized in that** the reflective layer (4) is made of silver and has a thickness of between 1 nm and 1 µm, preferably between 10 and 100 nm.

15. A process for the manufacture of a rigid substrate as claimed in one of the preceding claims, **characterized in that** it comprises the operations consisting in successively depositing, on a rigid transparent substrate (1):
- a textured organic layer (2) starting from a liquid composition in a solvent or in water, or starting from a solid composition, having if appropriate a viscosity of between 0.005 and 100, preferably 0.5 and 5, Pa.s, a newtonian or shear-thinning rheology, which can comprise at least one photoinitiator and/or at least one adhesion promoter, such as phosphate acrylate or silyl acrylate, then exposing the organic layer to ultraviolet or infrared radiation or to heating;
- an interfacial layer (3) by a vacuum physical vapor deposition (PVD) process, mainly magnetron-assisted cathode sputtering, chemical vapor deposition (CVD) or evaporation;
- a reflective layer (4) by an oxidation/reduction or equivalent process; and
- a protective paint layer (5) by a liquid process, such as by curtain coating or spray coating.

16. The process for the manufacture of a rigid substrate as claimed in claim 15, **characterized in that** the deposition of the textured organic layer (2) is carried out by printing, such as roller printing, printing by flexography, digital printing of the inkjet or sublimation type, or by screen printing.

17. The application of a rigid substrate as claimed in one of claims 1 to 14 in interior or exterior decoration, such as a wall, furniture surface.
